Europäisches Patentamt

**European Patent Office**

Office européen des brevets

(19)

(11) Veröffentlichungsnummer : **0 074 084**
**B1**

(12) **EUROPÄISCHE PATENTSCHRIFT**

(45) Veröffentlichungstag der Patentschrift :
04.03.87

(51) Int. Cl.⁴ : **B 29 B   7/48**

(21) Anmeldenummer : 82108056.1

(22) Anmeldetag : 01.09.82

(54) **Vorrichtung zum kontinuierlichen Aufschmelzen und Mischen von Kunststoffen.**

(30) Priorität : 01.09.81 DE 3134479

(43) Veröffentlichungstag der Anmeldung :
16.03.83 Patentblatt 83/11

(45) Bekanntmachung des Hinweises auf die Patenterteilung : 04.03.87 Patentblatt 87/10

(84) Benannte Vertragsstaaten :
BE CH FR GB IT LI NL

(56) Entgegenhaltungen :
DE-A- 2 003 593
DE-B- 1 657 574
DE-B- 1 679 878
DE-B- 1 679 884
DE-C-   846 012
FR-A- 2 472 970
GB-A- 1 208 476
US-A- 3 618 902
US-A- 4 120 920
US-A- 4 202 633

(73) Patentinhaber : Blach, Josef A.
Wilhelmstrasse 24
D-7144 Asperg (DE)

(72) Erfinder : Blach, Josef A.
Wilhelmstrasse 24
D-7144 Asperg (DE)

(74) Vertreter : Bardehle, Heinz, Dipl.-Ing. et al
Patent- und Rechtsanwälte Bardehle-Pagenberg-
Dost-Altenburg & Partner Postfach 86 06 20
D-8000 München 86 (DE)

## Beschreibung

Die Erfindung bezieht sich auf eine Vorrichtung gemäß dem Oberbegriff des Anspruchs 1.

Eine derartige Vorrichtung ist aus der US-A-3 618 902 bekannt. Diese Druckschrift zeigt zwei ineinandergreifende und gleichsinnig antreibbare parallele Schnecken, die in aufeinanderfolgende, jeweils gegeneinander winkelverdrehte Scheiben aufgeteilt sind, wobei die von Schnecke zu Schnecke benachbarten Scheiben jeweils paarweise gleiche Stärke aufweisen und die Scheiben innerhalb eines Paares jeweils um den gleichen Winkel in gleichem Sinne verdreht sind. Dabei liegen die einzelnen Scheiben pro Schnecke unmittelbar aneinander an, wobei ihre jeweiligen ebenen Stirnflächen sich ohne Unterbrechung bis zum Kamm der betreffenden Scheibe erstrecken. Wenn nun eine derartige Schnecke aus ihren einzelnen Scheiben zusammengebaut wird, so ergeben sich aus verschiedenen Gründen Längenunterschiede von Scheibe zu Scheibe und damit innerhalb der Scheibenpaare, was sich in einem Versatz von zwei Scheiben innerhalb eines Scheibenpaares äußert. Derartige Unterschiede gehen einerseits auf unvermeidbare Fabrikationstoleranzen und im Betrieb auch auf Temperatureinflüsse zurück. Die in der genannten Druckschrift offenbarte Betriebsweise, nämlich die Schnecken so laufen zu lassen, daß die ebenen Stirnflächen der einzelnen Scheiben von Schnecke zu Schnecke exakt ohne Abstand, aber auch ohne gegeneinander anzustoßen, aneinander vorbeilaufen, ist also nicht realisierbar.

Es ist weiterhin aus der DE-B-1 679 884 eine mehrwellige Schneckenmaschine bekannt, die ineinandergreifende Schnecken aufweist. In ihrem mittleren Bereich ist ein Abschnitt vorgesehen, in dem zwei Schnecken nebeneinander angeordnet sind, die unterschiedliche Stellungen aufweisen und daher nicht miteinander kämmen. An diesen Abschnitt ist dann eine durch Knetscheiben gebildete Knetzone angeschlossen, auf die die ineinandergreifenden Schnecken folgen. Durch diese Maßnahmen soll ein besonders gutes Dispergieren von Zuschlagstoffen in einer viskosen Masse erzielt werden. Die Offenbarung dieser Druckschrift läuft daher auf den Gedanken hinaus, im Falle des Anschlusses von Schneckenteilen an eine Mehrfachschnecke mit ineinandergreifenden Schnecken, wobei die folgenden Schneckenteile hinsichtlich Steigung bzw. Gangzahl anders ausgebildet sind als die vorhergehenden ineinandergreifenden Schnecken, die Schneckenteile so zu gestalten, daß sie nicht mehr ineinandergreifen.

Es ist weiterhin aus der DE-C-846 012 eine mehrwellige Schneckenmaschine mit ineinandergreifenden Schnecken bekannt, bei der die Schnecken axial in unmittelbar aufeinanderstoßende Abschnitte aufgeteilt sind, die offensichtlich an den Stoßstellen hinsichtlich ihres Querschnitts deckungsgleich sind. Die Aufteilung in einzelne Schneckenabschnitte dient dazu, die Schnecke durch Auswechseln von Abschnitten an unterschiedliche Betriebsbedingungen anzupassen, wozu eine Auswahl unter verschiedenen Ganghöhen der Schnecken erfolgt. Besondere Mischeffekte lassen sich hierdurch nicht erzielen.

Der Erfindung liegt die Aufgabe zugrunde, längs der einzelnen Schnecken aufeinanderfolgende Stellen der Einwirkung auf den Kunststoff im Sinne eines Aufschmelzens und Mischens relativ dicht aufeinanderfolgen zu lassen, um so die Verarbeitung des Kunststoffs möglichst gleichmäßig über die betreffende Länge der Schnecken zu verteilen und auf diese Weise ein besonders homogenes Produkt zu erhalten.

Diese Aufgabe wird durch die Merkmale des Anspruchs 1 gelöst.

Unter Ganghöhe ist in diesem Zusammenhang der radiale Abstand zwischen Schneckenaußenfläche und Schneckengrund zu verstehen.

Da in der Regel derartige Vorrichtungen mit mehreren achsparallelen Schnecken mehrgängig ausgebildet sind, ergeben sich aufgrund der Verdrehung der Scheiben zueinander in Umfangsrichtung eine der Gangzahl entsprechende Anzahl von durch die Verdrehung freigewordenen Stirnseitenflächen und infolgedessen die im Bereich dieser Flächen angeordneten Absätze, durch die der zu bearbeitende Kunststoff in seinem Fluß längs der Schubkante eines Schneckenganges gestört und aufgespalten wird, wodurch sich an diesen Einwirkungsstellen eine innige Durchmischung ergibt. Die dabei auftretenden Effekte des Aufstauens und Scherens des zu verarbeitenden Materials führen außerdem zu entsprechender Erwärmung und dienen damit der Plastifizierung des Materials. Die Einwirkungsstellen sind alle gleich ausgebildet, so daß jeweils über die Scheibenpaare eine gleichmäßige Einwirkung auf den Kunststoff erzielt wird.

Bei der Schneckenmaschine gemäß der oben erwähnten US-A-3 618 902 kann sich die mit der erfindungsgemäßen Vorrichtung erzielte Störung des Schneckenganges und dessen Aufspaltung zum Zwecke der innigen Durchmischung des zu verarbeitenden Materials nicht ergeben, da die einzelnen Scheiben innerhalb eines Scheibenpaares im Bereich ihrer Stirnseitenflächen aneinanderliegen und also keine Durchlässe bilden können. Diesen Nachteil der bekannten Maschine hatte man offenbar erkannt und diesem gemäß Spalte 1, Zeilen 33-36 der Patentschrift dadurch abzuhelfen versucht, daß das bei derartigen Schneckenmaschinen übliche dichte Kämmen der Schnecken im Bereich der Scheibenpaare aufgehoben und anstelledessen ein beträchtlicher Abstand zwischen die Schneckenkämme und die Schneckenflächen der jeweils anderen Scheiben gelegt wird. Hierdurch wird jedoch die gewünschte Extruderwirkung im Bereich jedes Scheibenpaares erheblich vermindert und infolgedessen die Mischwirkung entsprechend herabgesetzt, da diese auf den durch die Extruderwirkung erzeugten axialen Druck auf das zu verarbeitende Material angewiesen ist, der bei der erfindungsgemäßen Gestaltung der Scheibenpaare im wesentlichen erhalten bleibt und zu einem regelrechten Hindurchpressen des Materials zwischen den frei gewordenen Stirnseitenflächen führt. Bei der Konzeption der Maschine gemäß der US-A-3 618 902 ist man also bewußt einen ganz anderen Weg gegangen als bei der erfindungsgemäßen Vorrichtung.

Es sei in diesem Zusammenhang noch auf einen weiteren Stand der Technik verwiesen, gegeben durch die DE-A-25 50 969. In dieser ist eine Vorrichtung zum Homogenisieren von Kunststoffen mit zwei ineinandergreifenden Schneckenwellen offenbart, bei der an Schneckenabschnitte Bereiche mit Vieleckscheiben angeschlossen sind. Aufgrund der Wirkung der Vieleckscheiben wird das zu verarbeitende Material von einer Welle zur anderen hin- und her übergeben. Die einzelnen Vieleckscheiben sind dabei längs über jeder Welle gegeneinander verdreht, so daß sich bei der Drehung der Wellen Überlappungsbereiche der Vieleckscheiben von Welle zu Welle ergeben. Um in diesen Überlappungsbereichen eine Einwirkung auf das zu bearbeitende Material zu erzielen, weisen die Vieleckscheiben in den Überlappungsbereichen eine verminderte Breite auf, so daß sich Spalte zwischen den miteinander kämmenden Vieleckscheiben ergeben. In diesen Spalten findet dann die wesentliche Einwirkung auf das zu verarbeitende Material statt. Dieser Stand der Technik ist jedoch für die erfindungsgemäße Vorrichtung nicht richtungsweisend, da sich bei dem Ineinandergreifen von Schnecken ganz andere Verhältnisse ergeben als beim Ineinandergreifen von Vieleckscheiben. Bei den ineinandergreifenden Schnecken liegen wesentlich unübersichtlichere Verhältnisse vor als bei miteinander kämmenden Vieleckscheiben. Bei den ersteren ist nämlich nicht ohne weiteres ersichtlich, daß die durch die Aufteilung in Scheiben und deren gegenseitige Verdrehung entstehenden Überlappungsbereiche sich gegenseitig nicht so stören, daß hierdurch eine Drehung der Schneckenwellen unmöglich wird. Überraschenderweise hat sich jedoch gezeigt, daß auch Schnecken in gegeneinander verdrehte Scheiben aufteilbar sind, wobei als wesentlicher Effekt die Förderwirkung der Schnecke, die bei den verdrehten Vieleckscheiben praktisch nicht existiert, erhalten bleibt, zusätzlich zu diesem Effekt die Scher- und Mischwirkung aufgrund der durch die Verdrehung der Scheiben freigewordenen Stirnseitenflächen mit ihren Absätzen hinzutritt und sogar ein bei ineinandergreifenden Schnecken nicht zu erwartender, ausgeprägter Übergabeeffekt auftritt, der darauf zurückzuführen ist, daß sich pro Fliesskanal jeder Schnecke Verengungen und damit Stauungen des Materialflusses ergeben, die auf die gegenseitige Verdrehung der Scheiben zurückzuführen sind.

Wenn man die Vorrichtung so ausbildet, daß die Scheiben längs der Schnecken abnehmende Dicke aufweisen, dann ergibt sich vorteilhafterweise, daß das hindurchgeförderte Material, das sich aufgrund des Aufschmelzens verdichtet, immer häufiger durch die freigewordenen Stirnseitenflächen einer Bearbeitung unterzogen wird, da diese Stirnseitenflächen dann dichter aufeinanderfolgen.

Es ist außerdem möglich, die Dicke der Scheiben längs der Schnecken so zu wählen, daß auf eine dickere Scheibe eine dünnere und danach wieder eine dickere usw. folgt. Hierdurch ergibt sich der Effekt, daß abwechselnd unterschiedlich dicht aufeinanderfolgende Einwirkungsstellen geschaffen werden, was für viele Zwecke von Vorteil ist.

Es ist auch möglich, den aufeinanderfolgenden Scheiben jeweils unterschiedliche Schneckensteigungen zu geben. Hierdurch lässt sich die Aufeinanderfolge der Einwirkungsstellen so beeinflussen, daß eine somit möglicherweise gegebene Achsparallelität der Aufeinanderfolge der Einwirkungsstellen vermieden wird. Bei einer solchen würden sich bei Drehung der Wellen ungleichmässige Drehmomente ergeben.

Günstige Verhältnisse für die Scher- und Mischwirkung ergeben sich besonders dann, wenn die axiale Breite der Absätze maximal der Ganghöhe entspricht.

Um jede mögliche Verdrehung der Scheiben zueinander einstellen zu können, baut man die Schnecken zweckmäßig so auf, daß ihre Scheiben auf eine sie durchsetzende Schneckenachse wahlweise in verschiedenen Winkelstellungen aufsetzbar sind. Bei der Montage hat man dann die Möglichkeit, die jeweils gewünschte Winkelstellung einzustellen. Diese Winkelstellung kann dann auch nachträglich durch Auseinandernehmen von Scheiben und Schneckenachse geändert werden.

Ausführungsbeispiele sind in den Figuren dargestellt. Es zeigen :

Figur 1   Die Vorrichtung mit zwei achsparallelen Schnecken, die in ihrem mittleren Bereich aus gleichen Scheiben aufgebaut sind,

Figur 2   ein Scheibenpaar in Seitensicht,

Figur 3   das gleiche Scheibenpaar nach weiterer Verdrehung beider Schnecken um einen Winkel von 60˚,

Figur 4   eine Abwicklung der außenfläche der Schnecken gemäß Fig. 1,

Figur 5   eine Abwandlung der Vorrichtung gemäß Fig. 1 mit Scheiben abnehmender Dicke und unterschiedlicher Schneckensteigung,

Figur 6   eine Abwandlung der Vorrichtung gemäß Fig. 1 mit abwechselnd dicken Scheiben.

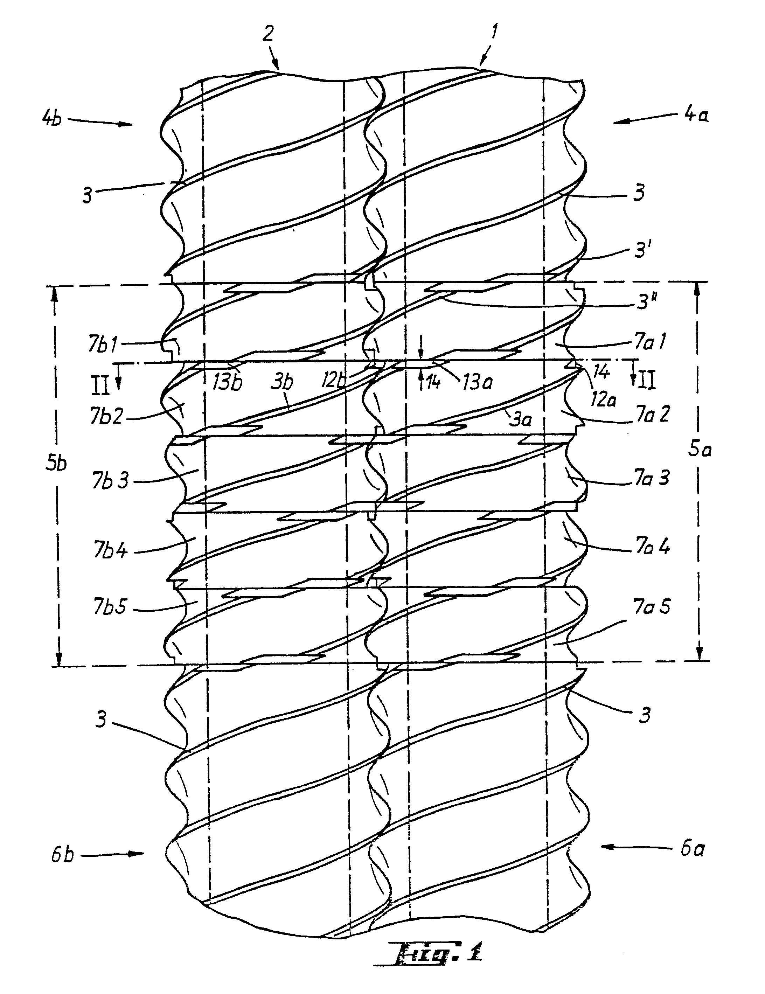

Die in der Fig. 1 dargestellte Vorrichtung zeigt die beiden achsparallelen Schnecken 1 und 2, die nahezu passend ineinandergreifen und durch ein bekanntes, hier nicht dargestelltes Getriebe gleichsinnig angetrieben werden. Ebenfalls nicht dargestellt ist in der Fig. 1 das Gehäuse, das in bekannter Weise die beiden Schnecken 1 und 2 so eng umschließt, daß die Gehäuseinnenwand die Schneckenkämme 3, 3', 3" mit geringem Spiel umschließt. Die Anordnung des Gehäuses ist aus der Fig. 2 ersichtlich. Die beiden Schnecken 1 und 2 sind je in die drei Bereiche 4a, 5a und 6a bzw. 4b, 5b und 6b eingeteilt. Dabei bilden die Bereiche 4a/4b und 6a/6b reine Förderbereiche, während es sich bei den Bereichen 5a und 5b um Aufschmelz- und Mischbereiche handelt, die je aus fünf Scheiben 7a bzw. 7b zusammengesetzt sind. Die Scheiben 7a und 7b enthalten jeweils Schneckenteile, die den Schnecken 4a/4b bzw. 6a/6b entsprechen. Wenn die Scheiben 7a und 7b so aneinandergefügt und an die Abschnitte 4a/4b und 6a/6b angeschlossen sein würden, daß die Schneckengänge ohne Stoßstelle kontinuierlich ineinander übergehen würden, dann ergäbe sich durchgehend jeweils eine Schnecke, wie sie in den Bereichen 4a/4b bzw. 6a/6b dargestellt ist. Im Bereich 5a/5b sind jedoch die einzelnen Scheiben 7a und 7b fortschreitend gegeneinander verdreht, und zwar jeweils um einen Winkel von 30°. Man erkennt diese Verdrehung besonders deutlich an der Übergangsstelle vom Bereich 4a zu der Scheibe 7a, wo die betreffenden Kämme 3' und 3" nicht aufeinandertreffen. Für die Stosstellen zwischen den weiteren Scheiben 7a2-7a5 bzw. 7b1-7b5 sowie die Anschlußstelle von den Scheiben 7a5/7b5 zu den Schnecken der Bereiche 6a/6b gilt das gleiche. Jeweils zwei Scheiben 7a1/7b1 usw. bilden dabei ein Paar, dessen beiden Scheiben 7a1 bzw. 7b1 jeweils um den gleichen Winkel verdreht sind, so daß innerhalb eines Paares die betreffenden Schnecken passend ineinandergreifen. Es bleibt daher im Bereich jedes Paares die Förderwirkung der Schnecke erhalten.

Fig. 2 zeigt die Anordnung gemäß Fig. 1 im Schnitt längs der Linie II-II. Zusätzlich ist in der Fig. 2 das Gehäuse 8 eingezeichnet, das die beiden Schnecken, von denen in Fig. 2 nur die Scheiben 7a2 und 7b2 sichtbar sind, mit geringem Spiel umgibt. Von den beiden Scheiben 7a2 und 7b2 sind deren Stirnseitenflächen 9a und 9b sichtbar, mit denen die beiden Scheiben 7a2 und 7b2 an den Scheiben 7a1 und 7b1 anliegen. Die beiden Scheiben 7a2 und 7b2 weisen darüberhinaus die beiden Durchbrüche 10a und 10b auf, auf deren Funktion weiter unten näher eingegangen wird. Die Verdrehung der beiden Scheiben 7a2 und 7b2, die um den gleichen Winkel in gleichem Sinne erfolgt ist, hat bezüglich des Ineinandergreifens der auf diesen beiden Scheiben ausgebildeten Schnecken keine Auswirkung. Die beiden Schnecken greifen nahezu passend nach wie vor ineinander ein, wenn die beiden Scheiben 7a2 und 7b2 gemäß Voraussetzung gleichsinnig angetrieben werden. Insofern liegen also bezüglich der beiden Scheiben 7a2 und 7b2 die gleichen Verhältnisse vor wie bezüglich der Schnecken in den Bereichen 4a und 4b bzw. 6a und 6b. Da nun die Scheiben 7a1/7b1 usw. von Paar zu Paar ohne Spalt mit ihren Stirnseiten 9a und 9b aneinander anliegen, so müßten bei Verdrehung der Schnecken 1 und 2 die in den Stirnseiten 9a und 9b endenden Kämme 3a und 3b in Berührungskontakt aneinander vorbeigleiten, was unvermeidbar zu einem Aneinanderstoßen dieser Stirnseiten führen würde. Aus diesem Grunde sind die Absätze 11a, 12a und 13a bzw. 11b, 12b und 13b vorgesehen, durch die die genannten Stirnseiten der Kämme 3a und 3b in axialer Richtung gegenüber den Stirnseitenflächen 9a und 9b zurückversetzt sind. Die Absätze 11a, 12a, 13a bzw. 11b, 12b, 13b bilden somit die gemäß Fig. 2 sichtbaren Stirnseiten der Kämme 3a und 3b, die infolgedessen von den betreffenden Stirnseiten des jeweils benachbarten Paares von Scheiben (in Bezug auf die Scheiben 7a2 und 7b2, die Scheiben 7a und 7b in einem Abstand aneinander vorbeilaufen, der der Breite 14 eines Absatzes entspricht (siehe Scheibe 7a1 in Fig. 1). Diese einfache Breite als Abstand des Vorbeigleitens ergibt sich darum, weil jeweils die Absätze 11a, 12a, 13a bzw. 11b, 12b, 13b und die weiteren in Fig. 1 eingezeichneten Absätze beim Vorbeilaufen an der gegenüberliegenden Scheibe des jeweils folgenden Paares an der Stirnseitenfläche dieses Paares vorbeilaufen, nicht aber an einem Absatz dieser Scheibe.

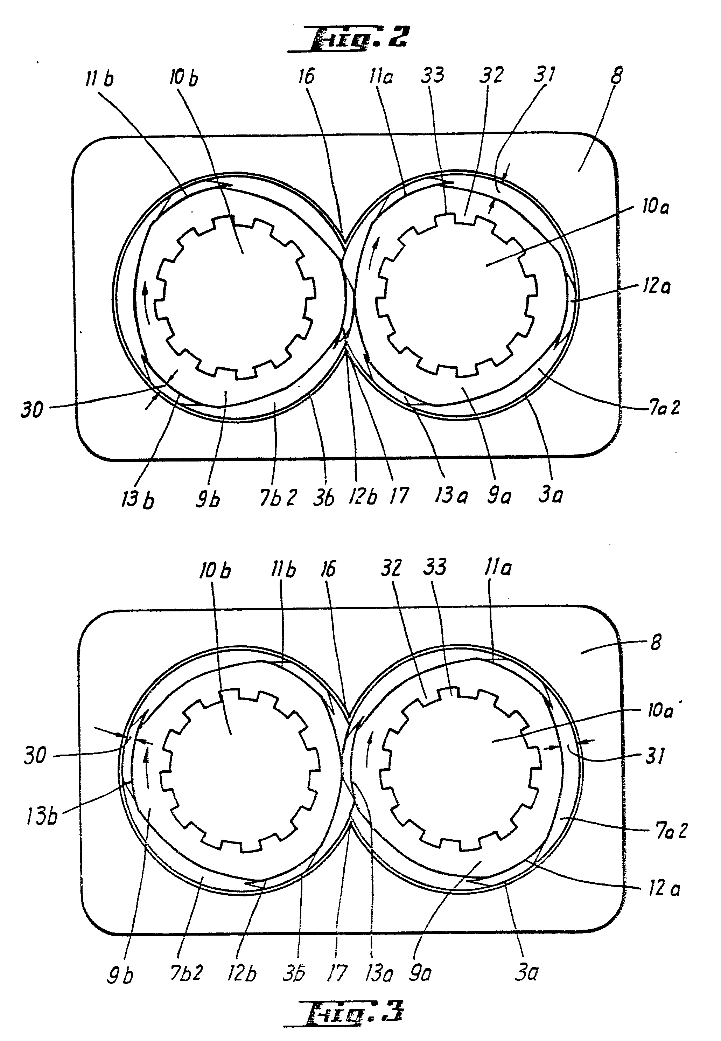

In der Fig. 3 ist das in Fig. 2 dargestellte Paar der Scheiben 7a2 und 7b2 in einer weiteren Arbeitsphase dargestellt, nämlich nach weiterer Verdrehung der beiden Schnecken um einen Winkel von 60°.

Den Fig. 2 und 3 ist abzulesen, daß das jeweils in einem Schneckengang transportierte Material, wenn es in den Bereich gelangt, in dem die beiden Schnecken miteinander kämmen, von einer Schnecke zur anderen umgelenkt wird, was die bekannte Funktion der eingangs beschrieben bekannten Doppelschnecke ist. Dabei entsteht an der Übergangsstelle durch die Umlenkung der Flußrichtung des Materials ein Stau, der das Material durch den durch die Absätze 11a, 12a und 13a bzw. 11b, 12b und 13b usw. hindurchdrückt, so daß an dieser Stelle eine Scherung des zu verarbeitenden Materials auftritt. Hinzu kommt, daß durch die Verdrehung der Scheiben 7a1 usw. bzw. 7b1 usw. gegeneinander die jeweilige Schnecke in ihrem kontinuierlichen Verlauf gestört wird, was natürlich den Fluß des von der Schnecke transportierten Materials in der gleichen Weise stört und zu gewünschten Stauungen und damit einem Durchmischen des Materials führt.

Aus Fig. 2 ist noch ersichtlich, daß der radiale Abstand 30 der Absätze 11a, 12a, 13a bzw. 11b, 12b, 13b von den Kämmen 3a bzw. 3b etwas größer ist als die halbe Ganghöhe 31. Auf jeden Fall muß dieser Abstand 30 gleich oder größer als die halbe Ganghöhe 31 sein, damit sich die Stirnseitenflächen von zwei versetzt zueinander auf jeweils einer anderen Welle angeordneten Scheibe beim Drehen der Wellen nicht berühren.

Aus den Fig. 1 und 2 geht weiterhin hervor, daß die in Fig. 1 eingezeichnete axiale Breite 14 des Absatzes 13 (und der weiteren Absätze) maximal der Ganghöhe 31 entspricht. Dies führt erfahrungsgemäß zu besonders günstigen Mischungsergebnissen.

Wie aus den Fig. 2 und 3 ersichtlich ist, besitzen die Scheiben 7a2 und 7b2 (und natürlich die weiterhin in Fig. 1 dargestellten Scheiben) eine Innenverzahnung mit Zähnen 32 und Zahnlücken 33. Mit dieser Innenverzahnung 32/33 werden die Scheiben verdrehungssicher auf mit einer entsprechenden Verzahnung versehene Wellen aufgeschoben, auf denen sie dann jeweils um den gewünschten Winkel verdreht aufgesetzt werden können. Hierdurch wird ermöglicht, daß sich der Verdrehungswinkel von Scheibe zu Scheibe längs einer Schnecke wahlweise einstellen läßt, und zwar mindestens um den Winkel der Zahnteilung der Verzahnung 32/33.

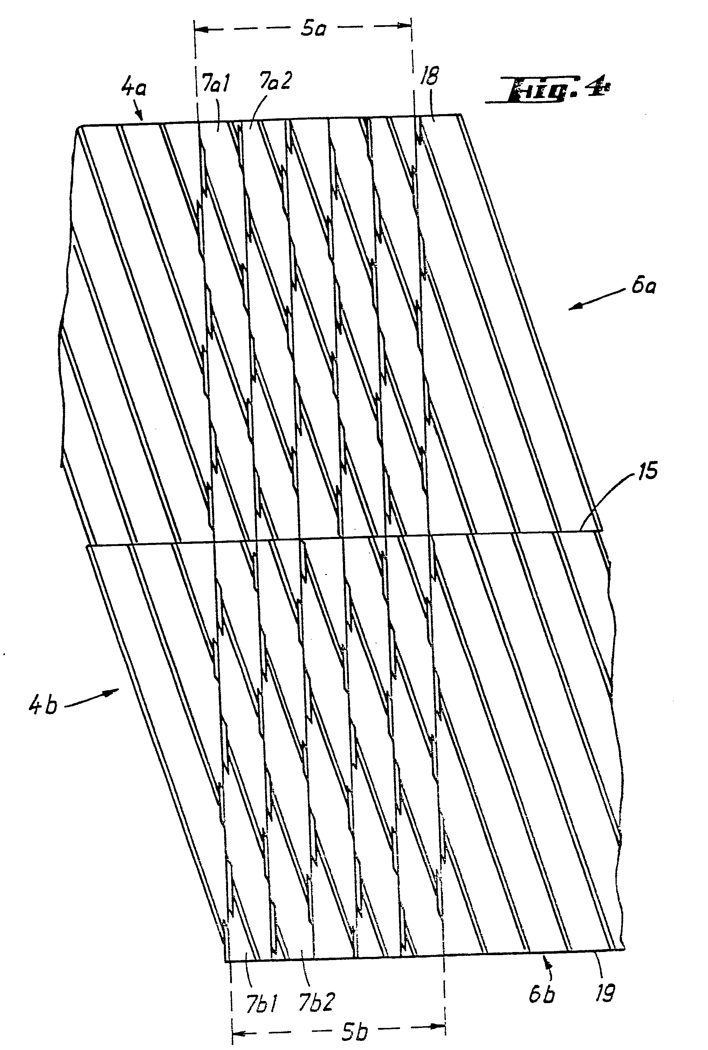

In der Fig. 4 ist eine Abwicklung der Darstellung aus Fig. 1 gezeigt. Dabei repräsentiert die Linie 15 die Kante 16 des Gehäuses 8 gemäß Fig. 2. Von dieser Kante ab erfolgt dann die Abwicklung über die beiden Schnecken 1 und 2 und unter Zugrundelegung der Fig. 2 nach rechts und links bis zu der der Kante 16 gegenüberliegenden Kante 17 des Gehäuses 8, wobei in Fig. 4 die Linien 18 und 19 die Kante 17 repräsentieren. Im übrigen ist die Analogie zwischen der Darstellung mit Fig. 4 und den Darstellungen gemäß den Fig. 2 und 3 durch die Verwendung gleicher Bezugszeichen hergestellt.

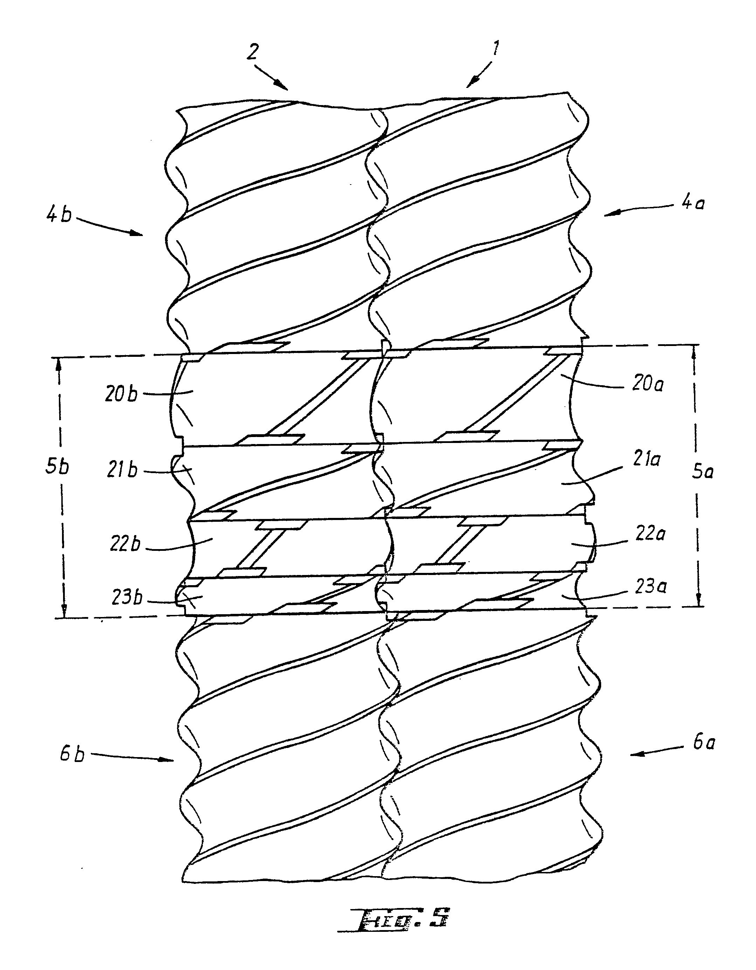

Bei der in der Fig. 5 dargestellten Vorrichtung handelt es sich um 2 Schnecken 1 und 2 mit Scheiben 20a-23a bzw. 20b-23b abnehmender Dicke, wobei außerdem die einzelnen Scheiben eine unterschiedliche Schneckensteigung aufweisen. Die Scheiben 20a und 22a bzw. 20b und 22b weisen gegenüber den Scheiben 21a und 23a bzw. 21b und 23b die größere Steigung auf. Sonst ist die Funktion der beiden Schnecken 1 und 2 mit den genannten Scheiben die gleiche, wie bei der Anordnung gemäß Fig. 1. Durch die unterschiedliche Scheibendicke wird erreicht, daß auf dem Wege von den dickeren Scheiben zu den dünneren Scheiben in kürzeren Zeitabständen das Material der Einwirkung durch die obenerwähnten Abschnitte (Einwirkungsstellen) unterworfen wird, so daß mit zunehmender Verdichtung des Materials auf dem Wege längs der Schnecken auch eine zunehmend intensivere Einwirkung erzielt wird. Durch die jeweils gewählte Steigung wird dabei der Effekt erzielt, daß beim Drehen der Schnecken 1 und 2 die die Einwirkungsstellen bildenden Abschnitte nicht in größerer Zahl gleichzeitig in den Kämmbereich der Schnecken 1 und 2 gelangen, was momentan eine erhebliche Belastung der Schnecken und damit notwendigerweise eine Erhöhung des Drehmomentes verursachen würde. Hierdurch wird erreicht, daß das Drehmoment über eine volle Drehung der Schnecken um 360° praktisch gleich bleiben kann.

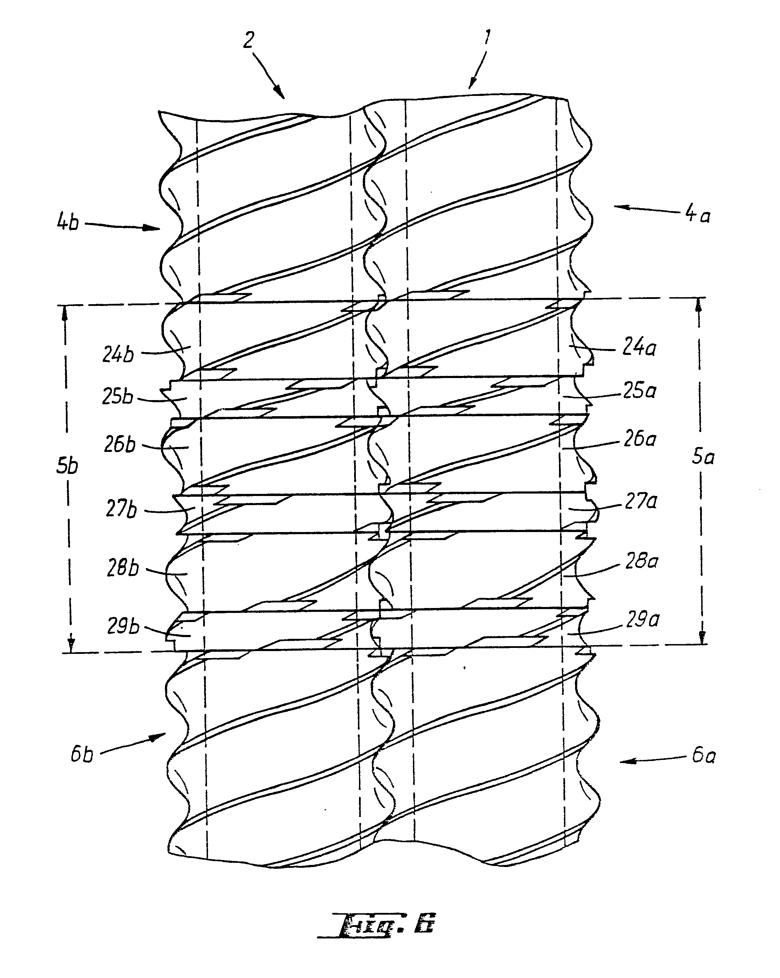

In der Fig. 6 ist eine Vorrichtung dargestellt, bei der Scheiben mit abwechselnder Dicke vorgesehen sind, wobei die Scheiben 24a/24b, 26a/26b und 28a/28b gegenüber den Scheiben 25a/25b und 27a/27b wesentlich dicker sind. Sonst ist die Funktion dieser Vorrichtung die gleiche wie bei der Vorrichtung gemäß Fig. 1. Durch die Anwendung von Scheiben unterschiedlicher Dicke ergibt sich der Effekt, daß gewissermaßen schrittweise eine besonders intensive Einwirkung auf das Material stattfindet, woraufhin sich dann im Bereich der dickeren Scheiben ein Bereich weniger intensiver Bearbeitung ergibt.

Es sei noch darauf hingewiesen, daß sich bei allen vorstehend beschriebenen Ausführungsbeispielen die die Einwirkungsstellen bildenden Abschnitte so liegen lassen, daß diese in ihrer axialer Aufeinanderfolge nicht auf einer Linie, also nicht achsparallel liegen. Bei einer derartigen Lage würde sich nämlich der Effekt ergeben, daß eine Vielzahl von Einwirkungsstellen beim Verdrehen der Schnecken in den Bereich der Kämmung der Schnecken gelangt, wodurch sich in dem betreffenden Augenblick eine wesentliche Erhöhung des Drehmomentes einstellen würde, da in diesem Falle die Schnecken besonders stark belastet sein würden. Um dies zu vermeiden, werden die Abschnitte zweckmässigerweise so gelegt, daß sie nicht achsparallel liegen.

Die vorstehend beschriebene Aufteilung der Schnecken in aufeinanderfolgende Scheiben ist sowohl bei Vorrichtungen mit zwei als auch mehr Schnecken. anwendbar, und zwar sowohl in der Weise, daß die Schneckenachsen einer Ebene, an den Spitzen eines Dreiecks oder in V-Form liegen.

**Patentansprüche**

1. Vorrichtung zum kontinuierlichen Aufschmelzen und Mischen von Kunststoffen mittels mehrerer paralleler Schnecken (1, 2) gleicher Steigungsrichtung, die dichtkämmend ineinandergreifen und gleichsinnig antreibbar sind, bei der jede Schnecke (1, 2) in unmittelbar aufeinanderfolgende jeweils gegeneinander winkelverdrehte Scheiben aufgeteilt ist, wobei die von Schnecke zu Schnecke benachbarten Scheiben (7a1 bis 7a5, 7b1 bis 7b5) jeweils paarweise gleiche Stärke aufweisen und die Scheiben innerhalb eines Paares jeweils um den gleichen Winkel im gleichen Sinne verdreht sind, dadurch gekennzeichnet, daß zur Erzielung einer Materialübergabe von einem Schneckengang zum nachfolgenden im Bereich der durch die Verdrehung freigewordenen Stirnseitenflächen (9a, 9b) der Scheiben (7a1 bis 7a5, 7b1 bis 7b5) diese Flächen zentrische Absätze (11a bis 13a, 11b bis 13b) aufweisen, die betreffenden Stirnseiten (9a, 9b) bei Schneckendrehung frei aneinander vorbeibewegbar sind und der radiale Abstand (30) der zentrischen Absätze von den Kämmen (3a, 3b) der Schnecken (1, 2) gleich bzw. etwas größer ist als die halbe Ganghöhe (31) (Fig. 1, 2, 3).

2. Vorrichtung nach Anspruch 1, dadurch gekennzeichnet, daß die Scheiben (20a-23a, 20b-23b) längs der Schnecken (1, 2) abnehmende Dicke aufweisen (Fig. 5).

3. Vorrichtung nach Anspruch 1, dadurch gekennzeichnet, daß die Dicke der Scheiben (24a-29a, 24b-29b) längs der Schnecken so gewählt ist, daß auf eine dickere Scheibe eine dünnere und danach wieder eine dickere usw. folgt (Fig. 6).

4. Vorrichtung nach Anspruch 1, dadurch gekennzeichnet, daß die aufeinanderfolgenden Scheiben (20a-23a, 20b-23b) jeweils unterschiedliche Schneckensteigung aufweisen (Fig. 5).

5. Vorrichtung nach einem der Ansprüche 1 bis 4, dadurch gekennzeichnet, daß die axiale Breite (14) der Absätze (11a-13a, 11b-13b) maximal der Ganghöhe (31) entspricht (Fig. 2, 3).

6. Vorrichtung nach einem der Ansprüche 1 bis 5, dadurch gekennzeichnet, daß die Scheiben (7a2, 7b2) auf eine sie durchsetzende Schneckenachse wahlweise in verschiedenen Winkelstellungen aufsetzbar sind.

## Claims

1. Apparatus for continuously melting and blending plastics by means of a plurality of parallel worms (1, 2) having the same direction of pitch, which worms interengage in a closely meshed relationship and are adapted to be driven to rotate in the same direction, with each worm (1, 2) being divided into sequential discs disposed in a angularly offset relationship and with pairs of adjacent discs (7a1 to 7a5, 7b1 to 7b5) of both worms having the same thickness, the discs of each such pair being offset by the same angle and in the same direction, characterized in that for achieving material transfer from one turn of each worm to the next in the area of the end faces (9a, 9b) of the discs (7a1 to 7a5, 7b1 to 7b5) which is exposed by the aforesaid angular offset those faces are provided with centered lands (11a to 13a, 11b to 13b), in that the respective end faces (9a, 9b) are adapted to move past each other freely during worm rotation, and in that the radial distance (30) of said centered lands from crests (3a, 3b) of the worms (1, 2) is equal to, or slightly greater than, one half of the pitch (31) (Figs. 1, 2, 3).

2. Apparatus as in claim 1, characterized in that the discs (20a to 23a, 20b to 23b) have thicknesses decreasing progressively along the worms (1, 2) (Fig. 5).

3. Apparatus as in claim 1, characterized in that the thickness of the discs (24a to 29a, 24b to 29b) along the worms is selected in such a manner that a thicker disc is followed by a thinner disc, which in turn is followed by a thicker disc, and so on (Fig. 6).

4. Apparatus as in claim 1, characterized in that the sequential discs (20a to 23a, 20b to 23b) have different worm pitches (Fig. 5).

5. Apparatus as in any one of claims 1 to 4, characterized in that the axial width (14) of the lands (11a to 13a, 11b to 13b) is not greater than the pitch (31) (Figs. 2, 3).

6. Apparatus as in any one of claims 1 to 5, characterized by discs (7a2, 7b2) being adapted to be mounted in different selective relative angular positions on a worm shaft extending therethrough.

## Revendications

1. Dispositif pour faire fondre et mélanger en continu des matières plastiques au moyen de plusieurs vis sans fin (1, 2) parallèles à même sens d'hélice, étroitement imbriquées l'une dans l'autre et qui sont entraînables dans le même sens, dans lequel chaque vis sans fin (1, 2) est partagée en disques se succédant l'un l'autre, décalés en rotation en angle de l'un à l'autre, et dont les disques qui sont adjacents de vis sans fin à vis sans fin (7a1-7a5, 7b1-7b5) présentent à chaque fois par paire la même épaisseur, les disques étant, à l'intérieur d'une paire, à chaque fois décalés en rotation du même angle dans le même sens, caractérisé en ce que pour l'obtention d'un transfert de matière d'un filet de vis au suivant dans la zone des surfaces de faces frontales (9a-9b) des disques (7a1-7a5, 7b1-7b5) dégagées du fait du décalage en rotation, ces surfaces comportent des décrochements centrés (11a-13a, 11b-13b), les faces frontales considérées (9a-9b) peuvent se déplacer en passant librement l'une devant l'autre lors de la rotation des vis sans fin, et la distance radiale (30) des décrochements centrés des crêtes (3a-3b) des vis sans fin (1, 2) est égale ou sensiblement supérieure à la demi-hauteur de filet (Figures 1, 2, 3).

2. Dispositif selon la revendication 1, caractérisé en ce que les disques (20a-23a, 20b-23b) présentent des épaisseurs décroissantes le long des vis sans fin (1, 2) (Figure 5).

3. Dispositif selon la revendication 1, caractérisé en ce que l'épaisseur des disques (24a-29a, 24b-29b) le long des vis sans fin est choisie de façon qu'à un disque plus épais succède un disque plus mince et à nouveau un plus épais, etc. (Figure 6).

4. Dispositif selon la revendication 1, caractérisé en ce que les disques se succédant (20a-23a, 20b-23b) comportent à chaque fois un pas de vis sans fin différent (Figure 5).

5. Dispositif selon l'une des revendications 1 à 4, caractérisé en ce que la largeur axiale (14) des décrochements (11a-13a, 11b-13b) correspond au maximum à la profondeur de filet (31) (Figures 2, 3).

6. Dispositif selon l'une des revendications 1 à 5, caractérisé en ce que les disques (7a2, 7b2) sont empilables, à volonté suivant des positions angulaires différentes, sur un axe de vis sans fin les traversant.

*Fig. 1*

**Fig.2**

**Fig.3**

**Fig. 4**

Fig. 5

Fig. 6